# EUROPÄISCHE PATENTSCHRIFT

(11) **EP 2 971 631 B1**
(45) Veröffentlichungstag und Bekanntmachung des Hinweises auf die Patenterteilung: **30.05.2018**
(21) Anmeldenummer: 14707152.6
(22) Anmeldetag: 27.02.2014
(51) Int. Cl.: F01N 13/00, G01N 27/407

(54) **SPEZIELLE DICHTUNGSGEOMETRIE BEI ABGASSENSOREN ZUR ERZEUGUNG EINER HOHEN DICHTIGKEIT ZUM MESSRAUM**
SPECIAL SEAL GEOMETRY FOR EXHAUST GAS SENSORS FOR PRODUCING HIGH LEAK TIGHTNESS WITH RESPECT TO THE MEASUREMENT CHAMBER
GÉOMÉTRIE SPÉCIALE DE JOINT POUR CAPTEURS DE GAZ D'ÉCHAPPEMENT, DESTINÉE À PRODUIRE UNE ÉTANCHÉITÉ ÉLEVÉE POUR LA CHAMBRE DE MESURE

(30) Priorität: 12.03.2013 DE 102013204231; 28.06.2013 DE 102013212570; 07.11.2013 DE 102013222594
(43) Veröffentlichungstag der Anmeldung: 20.01.2016
(73) Patentinhaber: Robert Bosch GmbH, 70442 Stuttgart (DE)
(72) Erfinder: BUCHHOLZ, Bastian, 70184 Stuttgart (DE); DORAISAMY, Narendiran, Tamilnadu Coimbatore-6410 (IN); WILDE, Juergen, 70736 Fellbach (DE); LINCK-LESCANNE, Markus, 72827 Wannweil (DE)
(86) Internationale Anmeldenummer: PCT/EP2014/053864
(87) Internationale Veröffentlichungsnummer: WO 2014/139802

(56) Entgegenhaltungen:
- DE-A1- 3 641 548
- DE-A1- 3 818 448
- DE-A1- 10 346 205
- DE-A1- 19 739 435
- DE-A1-102012 205 618
- DE-B3- 10 229 031
- JP-A- 2001 221 769
- JP-A- 2007 162 730
- US-A1- 2004 245 482
- US-A1- 2005 155 408
- US-A1- 2008 028 862

## Beschreibung

### Stand der Technik

Aus dem Stand der Technik ist eine Vielzahl verschiedener Sensorsysteme zur Erfassung von mindestens einer Eigenschaft eines Messgases in einem Messgasraum bekannt. Grundsätzlich ist im Rahmen der vorliegenden Erfindung unter einer Gaseigenschaft eine beliebige physikalische und/oder chemische Eigenschaft des Messgases zu verstehen, wobei eine oder auch mehrere Eigenschaften des Messgases erfasst werden können. Mit einem solchen Sensorsystem kann eine qualitative und/oder quantitative Erfassung mindestens einer Eigenschaft eines Messgases erfolgen, beispielsweise eine Erfassung mindestens einer Gaskomponente des Messgases, insbesondere eine Erfassung einer Gaskomponente in einem Luft-Kraftstoff-Gemisch, und/oder eine Erfassung einer Partikelkonzentration in dem Messgas, insbesondere einer Rußmassenkonzentration. Alternativ oder zusätzlich sind jedoch auch andere Eigenschaften des Messgases erfassbar.

Ein Sensorsystem zur Erfassung von einer Gaseigenschaft kann beispielsweise wie in Konrad Reif (Herausgeber) "Sensoren im Kraftfahrzeug", 2. Auflage 2012, S. 160 - 165, als eine Lambda-Sonde ausgestaltet werden, wobei eine Ausgestaltung sowohl als Zweipunkt-Lambda-Sonde als auch als Breitband-Lambda-Sonde, insbesondere als eine planare Breitband-Lambda-Sonde beschrieben wird. Mit einer Lambda-Sonde kann ein Gasanteil eines Gasgemisches in einem Brennraum bestimmt werden, beispielsweise die Luftzahl λ, die das Luft-Kraftstoff-Verhältnis angibt. Mit Zweipunkt-Lambda-Sonden ist eine Bestimmung des Luft-Kraftstoff-Verhältnisses nur in einem engen Bereich, bei stöchiometrischen Gemischen (λ=1), möglich. Dagegen kann mit einer Breitband-Lambda-Sonde eine Bestimmung über einen großen Bereich von A erfolgen. Diese beschriebenen Lambda-Sonden umfassen ein Sensorelement, meist ein keramischer Festkörperelektrolyt, bevorzugt aus Zirkoniumdioxid und Yttriumoxid oder auch Festkörperschichten, bevorzugt aus Zirkoniumdioxid. Zum Schutz vor Schädigungen ist das Sensorelement von einem Schutzrohr umgeben.

Grundsätzlich werden in Sensorsystemen, beispielsweise in einer Lambda-Sonde oder beispielsweise in einem Partikelsensor, welcher den gleichen geometrischen Aufbau wie eine Lambda-Sonde aufweisen kann, zur Messung einer Eigenschaft eines Messgases in einem Messgasraum Dichtungen zwischen verschiedenen Bauteilen des Sensorsystems benötigt. Beispielsweise wird in US 6,453,726 ein Gassensor mit einem teilweise von einem Gehäuse und einem oberen Schutzschild umgebenen Sensorelement beschrieben. Zum Schutz des Sensorelements ist eine U-förmige Dichtung zwischen dem oberen Schutzschild und dem Gehäuse angeordnet. Weiter wird in US 7,222,408 ein Gassensor mit einem Sensorelement beschrieben, welches hermetisch dicht in einem Gehäuse angeordnet ist. Mit einer Krause des Gehäuses wird eine Gasabdichtung eines Messgasraums und eines Referenzgasraums innerhalb des Gassensors ermöglicht.

Gemäß dem Stand der Technik wird eine Sonde zur Erfassung von mindestens einer Gaseigenschaft in einem Messgasraum durch ein Aufnahmeelement in einer Wand des Messgasraumes eingebracht. Zur Verhinderung eines Austritts des Messgases aus dem Messgasraum wird zwischen der Sonde und dem Messgasraum eine Dichtung angeordnet. Beispielsweise kann die Dichtung wie in DE 60 2005 002 375 T2 ausgestaltet sein. In DE 60 2005 002 375 T2 wird vorgeschlagen, eine Dichtigkeit einer Verbindung zwischen einer Sonde und einem Auspuffkrümmer von einem kreisförmigen Ring mit einem Querschnitt eines nach außen offenen U zu gewährleisten.

Weiter wird in DE 10 2012 205 618 A1 ein Sensor vorgeschlagen, welcher eine röhrenförmige Hülse aus Metall sowie ein röhrenförmiges Anbringungselement aufweist. Die Hülse weist einen Flansch auf, der vor dem Anbringungselement vorhanden ist und über einer radial innenliegende Fläche des Anbringungselements hinaus nach außen vorsteht. Eine Ecke des Flansches kommt mit einer schrägen Fläche des Anbringungselements in Kontakt.

Weiter wird in DE 100 22 958 A1 ein ein metallisches Gehäuse aufweisender Gassensor beschrieben, der mittels einer Hohlschraube in einer ein Messgas aufweisenden Messöffnung befestigt ist. Auf einer der Messöffnung zugewandten Seite des Gehäuses ist eine konisch geformte Fläche vorgesehen, mit der der Gassensor auf einer konisch geformten Gegenfläche aufsitzt. Die konisch geformten Flächen weisen zu einer Längsachse des Gehäuses gleichen Winkel auf. Eine solche flächige Dichtung nach dem Stand der Technik, wie beispielsweise in DE 60 2005 002 375 T2 mit einem Dichtring zwischen einer Sonde und einem Messgasraum und DE100 22 958 A1 beschrieben, ist jedoch nachteilig, da eine flächige Dichtung eine große Dichtfläche aufweist. So kann nur eine geringe Dichtwirkung ermöglicht werden.

Eine solche Dichtung mit einem zusätzlichen Dichtring nach dem Stand der Technik ist weiter nachteilig, da eine Montage einer Sonde, beispielsweise in einem Abgastrakt einer Brennkraftmaschine, mit einem Dichtring aufwendig und schwierig sein kann und zudem ein Verlust des Dichtrings bei der Montage möglich sein kann. Bei einer flächigen Dichtung ohne Dichtring, müssen eine hohe Parallelität und eine hohe Ebenheit von den aufeinander liegenden Flächen gewährleistet sein. Hierdurch können hohe Kosten für die Fertigung und eine hohe Empfindlichkeit gegenüber Beschädigungen entstehen.

Die JP 2001-221769 und die DE 103 46 205 A1 offenbaren weitere Gassensoren.

Die DE 10 2012 205 618 A1 offenbart ein Sensorsystem mit einer Sonde, deren Gehäuse ein Auflageelement zur Auflage auf einem Anbringungskörper als Tellerfeder ausgestaltet ist und die Sonde ringförmig in Form einer ringförmigen Schulter umschliesst. Der Anbringungskörper ist beispielsweise ein Auspuffrohr eines Kraftfahrzeugs.

Wünschenswert wäre daher ein Sensorsystem, welches eine hohe Dichtigkeit zwischen einer Sonde und einem Messgasraum aufweist und eine kostengünstige Fertigung und Robustheit der Dichtung ermöglicht.

### Offenbarung der Erfindung

Es wird dementsprechend ein Sensorsystem zur Erfassung mindestens einer Eigenschaft eines Messgases in einem Messgasraum vorgeschlagen, welches die Nachteile bekannter Sensorsysteme zur Erfassung mindestens einer Eigenschaft eines Messgases in einem Messgasraum zumindest weitgehend vermeidet. Insbesondere soll eine Abdichtung des Messgasraumes erreicht werden.

Bei der mindestens einen Eigenschaft des Messgases handelt es sich um die Partikelbeladung des Messgases.

Das Messgas kann grundsätzlich ein beliebiges Gas oder Gasgemisch sein, beispielsweise Abgas, Luft, ein Luft-Kraftstoff-Gemisch oder auch ein anderes Gas. Die Erfindung ist insbesondere im Bereich der Kraftfahrzeugtechnik einsetzbar, so dass es sich bei dem Messgasraum um einen Abgastrakt einer Brennkraftmaschine handeln kann. Bei dem Messgas kann es sich deshalb insbesondere um ein Luft-Kraftstoff-Gemisch handeln.

Das Sensorsystem umfasst eine Sonde zur Erfassung der mindestens einen Eigenschaft des Messgases. Unter einer Sonde kann grundsätzlich eine beliebige Vorrichtung oder eine Kombination von Vorrichtungen verstanden werden, welche zur qualitativen oder quantitativen Erfassung der mindestens einen Eigenschaft eingerichtet sind. Beispielsweise kann die Sonde eingerichtet sein, um mindestens ein Messsignal zu erzeugen, welches zu der mindestens einen zu erfassenden Eigenschaft korreliert.

### Die Sonde ist ein Partikelsensor.

Die Sonde weist mindestens ein Sensorelement und mindestens ein das Sensorelement umschließendes Sonden-Gehäuse auf. Unter einem Sensorelement kann grundsätzlich ein beliebiges Messelement oder eine Kombination von Messelementen verstanden werden, beispielsweise ein Sensorchip, welche zur qualitativen oder quantitativen Erfassung der mindestens einen Eigenschaft eingerichtet sind. Beispielsweise kann das Sensorelement einen Sensorchip und/oder eine elektronische Messschaltung umfassen. Das Sensorelement kann insbesondere eingerichtet sein, um mindestens ein Messsignal zu erzeugen, welches zu der mindestens einen zu erfassenden Eigenschaft korreliert. Das Sensorelement kann insbesondere ein keramisches Sensorelement sein. Insbesondere kann das Sensorelement ein keramisches Sensorelement sein, welches mindestens einen keramischen Körper und mindestens zwei mit dem keramischen Körper verbundenen Elektroden aufweist. Der keramische Körper kann mindestens einen keramischen Festelektrolyten aufweisen. Insbesondere kann das Messprinzip des Sensorelements auf der elektrolytischen Eigenschaft von bestimmten Festkörpern beruhen. Insbesondere eignen sich als Festkörper keramische Festelektrolyte, wie beispielsweise Zirkoniumdioxid (ZrO₂), insbesondere Yttrium-stabilisiertes (YSZ) oder Skandium-dotiertes Zirkoniumdioxid (ScSZ). Alternativ oder zusätzlich kann das Sensorelement beispielsweise mindestens zwei Elektroden aufweisen, beispielsweise auf einer Messoberfläche, insbesondere einer keramischen Messoberfläche, und kann beispielsweise eingerichtet sein, um einen elektrischen Widerstand zwischen den mindesten zwei Elektroden zu erfassen, welcher beispielsweise durch eine Partikelbeladung des Messgases beeinflusst werden kann. Das Sensorelement umfasst ein Heizelement, um eine geeignete Funktionstemperatur zu gewährleisten.

Unter einem Sonden-Gehäuse kann im Rahmen der vorliegenden Erfindung grundsätzlich ein Bauteil verstanden werden, welches die Sonde vollständig oder teilweise umgibt, beispielsweise ein Hülle, welche die Sonde, insbesondere das Sensorelement, umgibt und vor thermischen und mechanischen Einflüssen schützt. Das Sonden-Gehäuse kann insbesondere mindestens einen Innenraum umfassen, in welchem das mindestens eine Sensorelement angeordnet ist. Das Sonden-Gehäuse kann insbesondere ganz oder teilweise aus einem mechanisch starren Material hergestellt sein, welches die Sonde ganz oder teilweise gegenüber mechanischen Einflüssen schützt, beispielsweise aus mindestens einem metallischen Material.

Das Sonden-Gehäuse ist derart ausgestaltet, dass das Sensorelement in dem Sonden-Gehäuse mit dem Messgas beaufschlagbar ist. Beispielsweise kann das Sonden-Gehäuse eine Öffnung aufweisen, durch welche das Messgas in die Sonde eindringen kann. Beispielsweise kann das Sonden-Gehäuse mindestens ein Schutzrohr umfassen. Unter einem Schutzrohr ist ein Rohr, beispielsweise aus Metall, zu verstehen, das das Sensorelement vor thermischen und mechanischen Einflüssen schützt. Das Schutzrohr kann mindestens einen Innenraum und mindestens das in dem Innenraum aufgenommene Sensorelement aufweisen. Das Schutzrohr kann insbesondere ein doppelwandiges Schutzrohr sein, welches einen Ringspalt aufweist. Beispielsweise kann das Messgas durch den Ringspalt in den Innenraum einströmen. Insbesondere kann das Schutzrohr zu einer Einsteckachse, insbesondere einer unten noch näher beschriebenen Einsteckachse, gekippt in den Messgasraum zeigen. Unter dem Begriff "gekippt" kann verstanden werden, dass das Schutzrohr in einem Winkel zu der Einsteckachse angeordnet sein kann. Das Schutzrohr kann beispielsweise mindestens eine Einlassöffnung und mindestens eine Auslassöffnung aufweisen, beispielsweise mindestens eine Einlassöffnung, welche mit dem Ringspalt in Verbindung steht, und mindestens eine Auslassöffnung, welche mit dem Innenraum in Verbindung steht. Beispielsweise kann das Sonden-Gehäuse derart ausgestaltet sein, dass die Auslassöffnung tiefer in dem Messgasraum, beispielsweise einem Strömungsrohr, angeordnet ist als die Einlassöffnung. Auf diese Weise kann beispielsweise durch Druckunterschiede eine Strömung des Messgases von der Einlassöffnung durch den Innenraum hin zu der Auslassöffnung gewährleistet werden. Auch andere Ausgestaltungen sind jedoch grundsätzlich möglich.

Weiterhin weist das Sensorsystem ein mit einer Wand des Messgasraums verbindbares Aufnahmeelement auf. Unter einen Aufnahmeelement ist ein Bauteil zu verstehen, welches eingerichtet die Sonde in den Messgasraum einzubringen. Diese Wand kann beispielsweise eine Rohrwand eines Strömungsrohrs oder einer anderen Art von Messgasraum sein. Das Aufnahmeelement kann mit der Wand beispielsweise permanent verbunden sein, oder auch mit der Wand reversibel verbindbar sein. Das Aufnahmeelement kann die Sonde vollständig umschließen. Vorzugsweise kann das Aufnahmeelement die Sonde ringförmig umschließen.

Die Sonde ist entlang einer Einsteckachse in das Aufnahmeelement einbringbar und in dem Aufnahmeelement fixierbar. Die Einsteckachse kann hierbei durch die Einsteckrichtung der Sonde in das Aufnahmeelement definiert werden. Beispielsweise kann die Einsteckachse im Wesentlichen senkrecht zu einer Rohrachse eines Strömungsrohrs verlaufen, beispielsweise mit einer Abweichung von der Senkrechten um nicht mehr als 20°, insbesondere um nicht mehr als 10°. Insbesondere kann die Sonde lösbar mit dem Aufnahmeelement verbindbar sein.

Das Aufnahmeelement kann insbesondere als Einschweißstutzen ausgestaltet sein. Beispielsweise kann der Einschweißstutzen in eine Bohrung in dem Messgasraum eingesetzt und anschließend verschweißt und/oder auf andere Weise verbunden werden, vorzugsweise stoffschlüssig. Das Aufnahmeelement ist aus Stahl, insbesondere korrosionsbeständigem Stahl, hergestellt. Beispielsweise kann die Sonde kraftschlüssig, insbesondere durch eine Verschraubung, insbesondere durch eine lösbar Verschraubung, und/oder formschlüssig beispielsweise durch ein Verklemmen, insbesondere ein lösbares Verklemmen, in dem Aufnahmeelement fixierbar sein.

Erfindungsgemäss weist das Sensorsystem mindestens ein Fixierelement auf, welches eingerichtet ist, um die Sonde kraftschlüssig in dem Aufnahmeelement zu fixieren. Beispielsweise kann das Fixierelement eingerichtet sein, um die Sonde gegen das Aufnahmeelement zu pressen und/oder umgekehrt. Das Gehäuse und/oder das Aufnahmeelement können während eines Fixiervorgangs, beispielsweise während eines Verschraubens, starr und unverformt bleiben oder können sich ganz oder teilweise auch während des Fixiervorgangs verformen, beispielsweise elastisch oder plastisch.

Unter einem Fixierelement ist ein Bauteil zu verstehen, mit dem die Sonde in dem Aufnahmeelement befestigt werden kann.

Das Fixierelement weist mindestens ein Gewinde auf, das Gewinde weist ein Gehäuse-seitiges Gewinde und ein Aufnahmeelement-seitiges Gewinde auf. Das Gehäuse-seitige Gewinde kann eine Überwurfschraube umfassen. Das Fixierelement kann beispielsweise mit mindestens einer Überwurfschraube und/oder mindestens einer Überwurfmutter realisiert werden. Die Gewinde können für die kraftschlüssige Fixierung miteinander verschraubt werden. Auch andere Ausgestaltungen sind jedoch grundsätzlich möglich. Das Fixierelement ist aus Stahl hergestellt, vorzugsweise aus einem Edelstahl. So kann das Fixierelement, insbesondere die Überwurfschraube und/oder die Überwurfmutter, insbesondere aus einem Werkstoff ausgewählt aus der Gruppe bestehend aus einem Werkstoff (insbesondere einem Edelstahl) mit der Werkstoff-Nr. 1.4104; einem Werkstoff (insbesondere einem Edelstahl) mit der Werkstoff-Nr. 1.4105; einem Werkstoff (insbesondere einem Edelstahl) mit der Werkstoff-Nr. 1.4301; einem Werkstoff (insbesondere einem Edelstahl) mit der Werkstoff-Nr. 1.4303, einem Werkstoff (insbesondere einem Edelstahl) mit der Werkstoff-Nr. 1.4305 und einem Werkstoff (insbesondere einem Edelstahl) mit der Werkstoff-Nr. 1.4016 hergestellt sein.

Bei in das Aufnahmeelement eingebrachter Sonde kann das Aufnahmeelement das Gehäuse der Sonde derart umschließen, dass das Gehäuse teilweise in dem Messgasraum hineinragt und teilweise außerhalb des Messgasraums angeordnet ist. Unter teilweise in dem Messgasraum ragen ist zu verstehen, dass ein unterer Teil des Gehäuses, insbesondere das doppelwandige Schutzrohr, in dem Messgasraum angeordnet sein kann, während ein oberer Teil des Gehäuses außerhalb des Messgasraums angeordnet ist. Insbesondere kann das Gehäuse durch das Aufnahmeelement hindurch in den Messgasraum ragen.

Die Sonde ist von dem Messgasraum durch mindestens eine Dichtung abdichtbar. Unter einer Dichtung ist eine Vorrichtung zu verstehen, die eingerichtet ist, einen Stoffübergang, insbesondere ein Austritt des Messgases aus dem Messgasraum, zu verhindern. Die Dichtung kann insbesondere mediendicht ausgestaltet sein, beispielsweise dicht gegenüber dem Messgases und/oder gegenüber anderen fluiden Medien. Die Dichtung kann insbesondere druckdicht ausgestaltet sein, beispielsweise bis hin zu einem Druck von 2 bar oder mehr, beispielsweise einem Druck von bis zu 10 bar, 100 bar, 1 kbar oder mehr.

Unter einer Abdichtung der Sonde von dem Messgasraum kann somit allgemein eine Ausgestaltung der Dichtung verstanden werden, durch die ein Austritt von Stoffen aus dem Messgasraum, insbesondere ein Austritt von Messgas, durch einen Zwischenraum zwischen dem Gehäuse und dem Aufnahmeelement und/oder zwischen dem Gehäuse und der Wand des Messgasraums verhindert wird. Vom Begriff "abdichtbar" ist nicht nur die Möglichkeit einer Abdichtung umfasst sondern auch der Fall, dass die Sonde von dem Messgasraum abgedichtet ist.

Erfindungsgemäss ist die Dichtung unmittelbar zwischen dem Aufnahmeelement und dem Gehäuse ausgebildet, so dass durch die Dichtung unmittelbar ein Spalt zwischen dem Aufnahmeelement und dem Gehäuse abgedichtet wird.

Die mindestens eine Dichtung weist mindestens eine linienförmige Dichtung auf. Unter einer linienförmigen Dichtung kann verstanden werden, dass sich die Dichtung bildenden Flächen linienförmig berühren. Die Linienform weist dabei vorzugsweise eine unmessbar kleine Linienbreite auf. Bei einer Fixierung der Sonde kann die Sonde gegen das Aufnahmeelement gepresst werden und die Sonde kraftschlüssig in dem Aufnahmeelement fixiert werden. Durch eine dabei wirkende Anpresskraft können elastische und plastische Verformungen auftreten, und es kann sich die Breite der Linie ändern. Bei Wirken der Anpresskraft können die Linienbreiten der linienförmigen Dichtung beispielsweise im Bereich von < 1 mm, insbesondere von < 500 Mikrometern liegen. Auch andere Linienbreiten sind jedoch möglich, da die Linienbreiten, wie nachfolgend näher ausgeführt wird, von einer Vielzahl von Randbedingungen abhängig sein können.

Beispielsweise kann das Gehäuse auf dem Aufnahmeelement aufliegen oder umgekehrt, wobei in dem Bereich, in welchem das Gehäuse auf dem Aufnahmeelement auffliegt oder in welchem das Aufnahmeelement auf dem Gehäuse auffliegt, das Dichtelement ausgebildet sein kann, welches als linienförmige Dichtung ausgestaltet ist.

Die Sonde kann von dem Messgasraum durch eine oder auch durch mehrere Dichtungen abgedichtet sein. Sind mehrere Dichtungen vorgesehen, so ist mindestens eine dieser Dichtungen als linienförmige Dichtung ausgestaltet. Daneben können eine oder mehrere weitere Dichtungen vorgesehen sein, welche als linienförmige Dichtungen oder auch als nicht-linienförmige Dichtungen ausgestaltet sein können. Sind mehrere Dichtungen vorgesehen, so ist es bevorzugt, wenn zumindest die Dichtung, welche unmittelbar an den Messgasraum angrenzt, als linienförmige Dichtung ausgestaltet ist. Beispielsweise kann dies derart erfolgen, dass das Messgas auf dem Weg vom Messgasraum in einen Außenraum zunächst die linienförmige Dichtung passieren muss, um anschließend optional eine oder mehrere weitere Dichtungen zu passieren.

Die Dichtung kann insbesondere mindestens zwei linienförmige Dichtungen aufweisen. Insbesondere kann das Sensorsystem derart ausgestaltet sein, dass das Gehäuse zwischen zwei linienförmigen Dichtungen flexibel einspannbar ist und/oder das die beiden linienförmigen Dichtungen derart ausgestaltet sind, dass das Gehäuse hinsichtlich einer Kippbewegung um eine Achse des Sensorsystems flexibel einspannbar ist.

Das Aufnahmeelement und das Gehäuse selbst bilden erfindungsgemäss die linienförmige Dichtung.

Erfindungsgemäss wird durch mindestens ein Fixierelement das Gehäuse gegen das Aufnahmeelement gepresst. Das Aufnahmeelement kann durch das Fixierelement gegen das Gehäuse gepresst werden. Das Fixierelement kann insbesondere mindestens eine Mutter und/oder mindestens eine Schraube umfassen, beispielsweise mindestens eine Überwurfmutter und/oder mindestens eine Überwurfschraube.

Die Linienbreite der linienförmigen Dichtung kann, wie oben ausgeführt, stark abhängig sein von den Randbedingungen der Fixierung der Sonde in dem Aufnahmeelement. Insbesondere kann die Linienbreite von einem Anzugsmoment einer Fixierungsschraube und/oder einer Geometrie der Dichtflächen abhängig sein. Ohne eine Anpresskraft ist die Linienbreite vorzugsweise im Rahmen der Fertigungstoleranzen verschwindend gering, beispielsweise < 1 mm oder < 500 Mikrometer. Mit einer Anpresskraft hingegen kann es zu elastischen und/oder plastischen Verformungen kommen, die dann die Geometrie der Dichtfläche ändern können. Diese Änderung kann dann zwar aufgrund einer Vergrößerung der Dichtfläche zunächst einen maximal erreichbaren Dichtdruck verkleinern. Andererseits können jedoch elastische und/oder plastische Verformungen auch helfen, kleine Fertigungsstreuungen und Unebenheiten auszugleichen. Grundsätzlich ist die Anwendung linienförmiger Dichtungen aus anderen Bereichen des Standes der Technik bekannt. Eine linienförmige Dichtung ist beispielsweise aus DE 10 234 615 bei einer Bördelverbindungsbaugruppe von Rohren mit einer Metall-Metall-Liniendichtung und aus US 737 3827 bei einem Hochdrucksensor bekannt. In DE 3 441 918 wird eine linienförmige Dichtung mit konischem Radius bei einem plattenförmigen Filtereinsatz für Fahrzeugkabinen-Luftfilter beschrieben. Weiter wird eine konisch-konische Dichtgeometrie beispielsweise in DE 234 90 89 bei einem stopfbuchsenlosen Magnetventil für kerntechnische Anlagen, in DE 4 242 290 bei Hochdruck-Fluid Filtrationssystemen, in US 41 69 967 bei der Isolation von elektrischen Leitungen und in DE 2 901 507 bei einem Ventil mit einem polymeren Material beschrieben. Beispielsweise aus DE 3 641 548 ist eine Schneidkantendichtung beispielsweise bei Verschlüssen von Behältern und Rohren bekannt. Bei der Ausgestaltung der vorgeschlagenen linienförmigen Dichtung kann auf die Ausgestaltung der linienförmigen Dichtungen nach dem Stand der Technik verwiesen werden, mit den zusätzlichen erfindungsgemäßen Merkmalen. Auch eine andere Ausgestaltung des linienförmigen Dichtelements ist jedoch grundsätzlich möglich.

Das Gehäuse weist erfindungsgemäss ein Auflageelement auf. Unter einem Auflageelement ist ein Bauteil zu verstehen, welches eingerichtet ist, auf einem anderen Bauteil aufzuliegen. Das Auflageelement umschliesst die Sonde erfindungsgemäss ringförmig in Form einer ringförmigen Schulter.

Das Auflageelement ist erfindungsgemäss als Tellerfeder ausgestaltet, wobei die ringförmige Schulter die Tellerfeder bildet.

Das Gehäuse und/oder das Auflageelement sind aus einem metallischen Werkstoff gebildet, nämlich einem Stahl, vorzugsweise einem Edelstahl. Das Gehäuse und/oder das Auflageelement können insbesondere, jeweils unabhängig voneinander und jeweils ganz oder teilweise, aus einem Werkstoff ausgewählt aus der Gruppe bestehend aus einem Werkstoff (insbesondere einem Edelstahl) mit der Werkstoff-Nr. 1.4104; einem Werkstoff (insbesondere einem Edelstahl) mit der Werkstoff-Nr. 1.4105; einem Werkstoff (insbesondere einem Edelstahl) mit der Werkstoff-Nr. 1.4301; einem Werkstoff (insbesondere einem Edelstahl) mit der Werkstoff-Nr. 1.4303; einem Werkstoff (insbesondere einem Edelstahl) mit der Werkstoff-Nr. 1.4305 und einem Werkstoff (insbesondere einem Edelstahl) mit der Werkstoff-Nr. 1.4016 hergestellt sein.

Das Auflageelement weist erfindungsgemäss mindestens ein Element auf, welches einen Radius aufweist.

Unter einer konischen Fläche ist eine Fläche zu verstehen, welche um einen Winkel abgeschrägt ist, insbesondere eine Fase. Unter einer Fläche, welche einen Radius aufweist, kann eine beliebig abgerundete Fläche verstanden werden. Das Auflageelement kann grundsätzlich ein separates Bauteil sein, das nach dem Herstellungsprozess der Sonde auf die Sonde durch einen Fügeprozess, beispielsweise durch Schweißen oder Löten oder auch durch andere Prozesse, aufgebracht werden kann. Alternativ kann das Auflageelement bereits während des Herstellungsprozesses der Sonde, beispielsweise bei einem Tiefziehprozess, zugefügt werden. Die konische Fläche, insbesondere die Fase und die Fläche, welche einen Radius aufweist, können beispielsweise durch Fräsen oder Hobeln an dem Auflageelement hergestellt werden.

Weiter weist das Aufnahmeelement erfindungsgemäss mindestens ein Dichtelement auf. Unter einem Dichtelement ist grundsätzlich ein Bauteil des Aufnahmeelements zu verstehen, auf welchem das Auflageelement der Sonde aufliegen kann. Das Dichtelement weist erfindungsgemäss ein Element auf, bestehend aus einer konischen Fläche. Unter einer konischen Fläche des Dichtelements ist eine Fläche zu verstehen, welche um einen Winkel abgeschrägt ist. Das Dichtelement kann grundsätzlich ein separates Bauteil sein, das nach dem Herstellungsprozess des Aufnahmeelements auf das Aufnahmeelement durch einen Fügeprozess, beispielsweise durch Schweißen oder Löten oder auch durch andere Prozesse, aufgebracht werden kann. Alternativ kann das Dichtelement bereits während des Herstellungsprozesses des Aufnahmeelements, beispielsweise bei einem Tiefziehprozess, zugefügt werden. Die konische Fläche und die Fläche, welche einen Radius aufweist, können beispielsweise durch Fräsen oder Hobeln an dem Aufnahmeelement hergestellt werden.

Das Auflageelement und das Dichtelement bilden die linienförmige Dichtung, bei der sich die das Auflageelement und das Dichtelement linienförmig berühren. Bei in das Aufnahmeelement eingebrachter Sonde liegt das Auflageelement auf dem Dichtelement auf. Die linienförmige Dichtung ist eingerichtet einen Austritt des Messgases aus dem Messgasraum, zu verhindern. Die linienförmige Dichtun, ist erfindungsgemäss eine konisch-radius-förmigen Dichtung.

Erfindungsgemäss liegt das Auflageelement bei in das Aufnahmeelement eingebrachter Sonde auf der abgeschrägten Fläche des Dichtelements linienförmig auf und bildet so mit dem Dichtelement eine linienförmige Dichtung. Unter einer linienförmigen Auflage kann verstanden werden, dass sich die Flächen des Auflageelements und des Dichtelements linienförmig berühren.

Erfindungsgemäss weisen das Auflageelement und das Dichtelement eine konisch-radius-förmige Dichtung auf-Erfindungsgemäss weist das Auflageelement der Sonde eine radius-förmige Fläche auf, die bei in das Aufnahmeelement eingebrachter Sonde auf der abgeschrägten Fläche des Dichtelements linienförmig aufliegt-und so eine linienförmige Dichtung bildet.

Das Auflageelement und das Dichtelement können selbst-zentrierend ausgestaltet sein. Eine selbst-zentrierende Ausgestaltung kann durch die konische Form jeweils eines und/oder beider Elemente ausgewählt aus der Gruppe bestehend aus dem Auflageelement und dem Dichtelement, in Kombination mit der linienförmigen Auflage des Auflageelements auf dem Dichtelement erreicht werden.

In einer weiteren Ausführungsform kann die Dichtung mindestens zwei linienförmige Dichtungen aufweisen. Das Auflageelement kann in einer axialen Richtung zwischen den linienförmigen Dichtungen eingebettet sein. Beispielsweise kann das Auflageelement zwischen den linienförmigen Dichtungen in einem Winkel zu einer Achse des Sensorsystems, beispielweise der Einsteckachse, fixiert werden, insbesondere in einem Kippwinkel zu der Achse.

Die linienförmigen Dichtungen können eine erste linienförmige Dichtung und eine zweite linienförmige Dichtung umfassen. Die erste linienförmige Dichtung wird dann durch das Aufnahmeelement und das Auflageelement gebildet. Hinsichtlich einer Ausgestaltung der ersten linienförmigen Dichtung kann auf die oben beschriebene linienförmige Dichtung zwischen dem Aufnahmeelement und dem Gehäuse verwiesen werden.

Die zweite linienförmige Dichtung kann durch das Gehäuse, insbesondere das Auflageelement, und ein Fixierelement zur Fixierung des Gehäuses in dem Aufnahmeelement, insbesondere eine Überwurfschraube und/oder eine Überwurfmutter, gebildet werden. Insbesondere können sich bei in das Aufnahmeelement eingebrachter Sonde das Auflageelement und das Fixierelement linienförmig berühren. Die zweite linienförmige Dichtung kann insbesondere jeweils ausgewählt sein aus der Gruppe bestehend aus einer konisch-konischen Dichtung, einer konisch-radius-förmigen Dichtung.

Bei einer konisch-konischen Dichtung des Auflageelement und des Fixierelements können beispielsweise das Auflageelement und das Fixierelement, insbesondere eine Überwurfschraube und/oder eine Überwurfmutter, jeweils eine konische Fläche aufweisen. Die konischen Flächen des Auflageelements und des Fixierelements können insbesondere konische Flächen mit unterschiedlichem Konuswinkel sein. Der Neigungswinkel der konischen Flächen zueinander kann grundsätzlich variieren und beispielsweise an Kundenanforderungen angepasst werden.

Bei einer konisch-radius-förmigen Dichtung kann beispielsweise ein Element ausgewählt aus dem Auflageelement und dem Fixierelement eine konische Fläche und das andere Element einen Radius, beispielsweise eine beliebig abgerundete Fläche, aufweisen. Beispielsweise kann das Auflageelement der Sonde eine radius-förmige Fläche aufweisen und bei in das Aufnahmeelement eingebrachter Sonde eine konische Fläche des Fixierelements linienförmig berühren und eine linienförmige Dichtung bilden. Beispielsweise kann das Fixierelement eine radius-förmige Fläche aufweisen und bei in das Aufnahmeelement eingebrachter Sonde eine konische Fläche des Auflageelements linienförmig berühren und eine linienförmige Dichtung bilden.

Zur Ausgestaltung der konisch-konischen Dichtung und der konisch-radius-förmigen Dichtung kann auf die Beschreibung der konisch-konischen Dichtung und der konisch-radius-förmigen Dichtung des Auflageelements und Dichtelements verwiesen werden.

Das Auflageelement und das Fixierelement können selbst-zentrierend ausgestaltet sein. Eine selbst-zentrierende Ausgestaltung kann durch die konische Form jeweils eines Elements und/oder beider Elemente ausgewählt aus der Gruppe bestehend aus dem Auflageelement und dem Fixierelement, in Kombination mit der linienförmigen Berührung des Auflageelements und des Fixierelement erreicht werden.

Die folgenden Ausführungsformen sind insbesondere vorstellbar:
i) Die erste linienförmige Dichtung kann als eine konisch-radius-förmige Dichtung und die zweite linienförmige Dichtung als eine konisch-konische Dichtung ausgestaltet sein;
ii) Die erste linienförmige Dichtung kann als eine konisch-radius-förmige Dichtung und die zweite linienförmige Dichtung als eine konisch-radius-förmige Dichtung ausgestaltet sein.

### Vorteile der Erfindung

Durch das erfindungsgemäße Sensorsystem kann eine Dichtung zwischen der Sonde und dem Abgastrakt einer Brennkraftmaschine erreicht werden. Durch das Dichtprinzip der linienförmigen Dichtung kann aufgrund der geringen Dichtfläche ein hoher Dichtdruck erreicht werden, wobei der Dichtdruck als Kraft pro Fläche definiert ist. Der hohe Dichtdruck führt zu einer höheren Robustheit gegen ein Lösen der Verbindung von dem Aufnahmeelement und der Sonde gegenüber Temperaturschwankungen und Schwingungsbeschleunigungen, insbesondere gegen Vibrationen, in Vergleich zu Dichtungen, welche aus dem Stand der Technik ausgestaltet sind. Ein weiterer Vorteil gegenüber Dichtungen, welche nach dem Stand der Technik mit einer Flachdichtung, insbesondere mit einem Dichtring, ausgestaltet sind, ist, dass ein Bauteil weniger benötigt wird. Dadurch kann der schwierige und aufwendige Einbau dieses Bauteils vermieden werden und Kosten reduziert werden.

Durch die flexible Einspannung des Gehäuses zwischen zwei linienförmigen Dichtungen kann eine Messempfindlichkeit und Diagnosefähigkeit der Sonde im Vergleich zum Stand der Technik verbessert werden und eine hohe Toleranz gegenüber Fertigungsstreuungen kann ermöglicht werden. Weiter kann mit einer Ausgestaltung der Dichtung mit zwei linienförmigen Dichtungen eine hohe Dichtigkeit erreicht werden.

Zudem ist die erfindungsgemässe Ausgestaltung des Auflageelements als Tellerfeder vorteilhaft, da eine Vibrationsbeständigkeit der Sonde verbessert wird.

### Kurze Beschreibung der Zeichnungen

Weitere Einzelheiten und Merkmale ergeben sich aus der nachfolgenden Beschreibung bevorzugte Ausführungsbeispiele, welche in den Figuren schematisch dargestellt sind.

Es zeigen:
- Figur 1: ein Ausführungsbeispiel eines erfindungsgemäßen Sensorsystems;
- Figur 2B: ein Ausführungsbeispiel einer erfindungsgemäßen linienförmigen Dichtung
- Figuren 3A und 3B: ein weiteres Ausführungsbeispiel der erfindungsgemäßen Dichtung;
- Figuren 4A und 4B: ein weiteres Ausführungsbeispiel der erfindungsgemäßen Dichtung;
- Figuren 5A und 5B: ein Ausführungsbeispiel der erfindungsgemäßen Dichtung mit einem erfindungsgemäßen Auflageelement; und
- Figuren 6A und 6B: ein Ausführungsbeispiel der erfindungsgemäßen Dichtung mit dem erfindungsgemäßen Auflageelement.

### Ausführungsformen der Erfindung

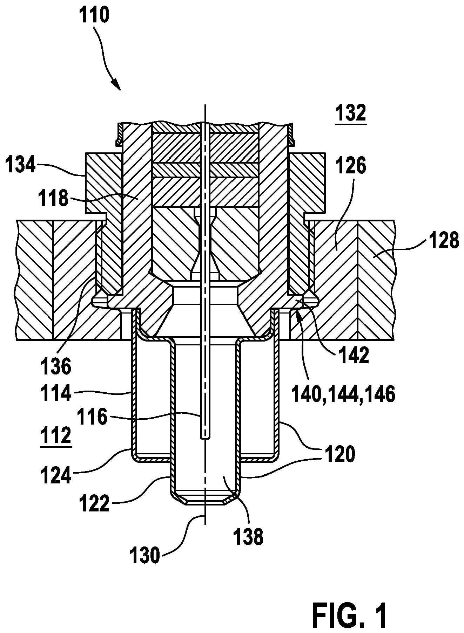

Ein Ausführungsbeispiel eines erfindungsgemäßen Sensorsystems 110 zur Erfassung mindestens einer Gaseigenschaft eines Messgases in einem Messgasraum 112 ist schematisch in Figur 1 dargestellt. Das Sensorsystem 110 weist eine Sonde 114 zur Erfassung der Eigenschaft des Messgases in dem Messgasraum 112 auf. Die Sonde 114 kann insbesondere als Lambda-Sonde ausgestaltet sein, welche insbesondere zur Erfassung einer Gaskomponente in einem Luft-Kraftstoff-Gemisch in einem Abgastrakt eines Kraftfahrzeugs eingesetzt wird. Bei dem Messgasraum 112 kann es sich demnach insbesondere um ein Strömungsrohr handeln. Die Sonde 114 kann ein Sensorelement 116 umfassen, beispielsweise wie in Konrad Reif, (Hrsg.) "Sensoren im Kraftfahrzeug", erste Auflage 2012, S. 160-165, ausgestaltet sein kann. Auch andere Ausgestaltungen des Sensorelements 116 sind jedoch grundsätzlich möglich, beispielsweise kann das Sensorelement 116 auch als ein Temperatursensorelement oder Drucksensorelement oder Partikelsensorelement ausgestaltet sein. Die Sonde 114 kann ein Gehäuse 118 mit einem Schutzrohr 120 aufweisen, welches das Sensorelement 116 umgibt, um es vor thermischen und auch mechanischen Einflüssen zu schützen. Das Schutzrohr 120 kann als ein doppelwandiges Schutzrohr ausgestaltet sein, welches ein inneres Schutzrohr 122 und ein äußeres Schutzrohr 124 umfasst.

Das Sensorsystem 110 weist ein Aufnahmeelement 126 auf, welches mit einer Wand 128 des Messgasraums 112 verbunden werden kann. Die Verbindung kann dabei permanent, beispielsweise durch eine Schweißverbindung sein. Bevorzugt kann die Verbindung als eine reversible Verbindung, beispielsweise durch eine Schraubverbindung, ausgestaltet werden, bei der die Sonde 114 lösbar mit dem Aufnahmeelement 126 verbunden ist. Das Aufnahmeelement 126 kann dabei beispielsweise als Einschweißstutzen ausgestaltet sein, beispielsweise aus korrosionsbeständigem Stahl. Der Einschweißstutzen kann mit der Wand 128 des Messgasraums 112 verschweißt werden. Die Sonde 114 ist entlang einer Einsteckachse 130 von einem Außenbereich 132 durch das Aufnahmeelement 126 in den Messgasraum 112 einbringbar. Bei eingebrachter Sonde 114 kann das Aufnahmeelement 126 die Sonde 114 vollständig umschließen. Insbesondere kann die Sonde 114 von dem Aufnahmeelement 126 ringförmig umschlossen werden. Das Gehäuse 118 der Sonde 114 kann, in dem in das Aufnahmeelement 126 eingebrachten Zustand, teilweise in den Messgasraum 112 hineinragen und teilweise außerhalb des Messgasraums 112 angeordnet sein. Insbesondere kann das Gehäuse 118 durch das Aufnahmeelement 126 hindurch in den Messgasraum 112 ragen. Beispielsweise kann ein Teil, beispielsweise 50 % des doppelwandigen Schutzrohrs 120, bevorzugt 80 %, besonders bevorzugt 90 % des doppelwandigen Schutzrohres 120 in den Messgasraum 112 hineinragen.

Weiter kann das Sensorsystem 110 mindestens ein Fixierelement 134 aufweisen, um die Sonde 114 an dem Aufnahmeelement 126 zu befestigen. Die Sonde 114 kann durch das Fixierelement 134 gegen das Aufnahmeelement 126 gepresst und kraftschlüssig fixiert werden. Das Fixierelement 134 kann mindestens ein Gewinde 136 aufweisen, welches ein Gehäuse-seitiges Gewinde und ein Aufnahmeelement-seitiges Gewinde umfassen kann. Das Gehäuse-seitige Gewinde kann eine Überwurfschraube umfassen. Beispielsweise kann die Sonde 114 mit einer Überwurfschraube und/oder mindestens einer Überwurfmutter kraftschlüssig, durch Verschrauben, fixiert werden. In Fig. 1 ist ein Ausführungsbeispiel dargestellt, bei dem die Sonde 114 mit einer Überwurfschraube in einem Einschweißstutzen befestigt werden kann.

Weiterhin kann das doppelwandige Schutzrohr 120 einen Innenraum 138 aufweisen. In den Innenraum 138 kann das Sensorelement 116 aufgenommen sein. Bei in das Aufnahmeelement 126 eingebrachter Sonde 114 kann Messgas in den Innenraum 138 eindringen. Das doppelwandige Schutzrohr 120 kann dazu einen Ringspalt aufweisen, so dass das Messgas durch den Ringspalt in den Innenraum 138 einströmen kann.

Die Sonde 114 kann durch eine Dichtung 140 von dem Messgasraum 112 abgedichtet werden. Die Dichtung 140 ist als eine linienförmige Dichtung ausgestaltet. Bei in das Aufnahmeelement 126 eingebrachter Sonde 114 kann die Dichtung 140, insbesondere eine erste linienförmige Dichtung 146, zwischen dem Messgasraum 112 und dem Fixierelement 134 angeordnet sein und einen Austritt des Messgases aus dem Messgasraum 112 verhindert werden. Das Gehäuse 118 umfasst ein Auflageelement 142. Das Auflageelement 142 ist ringförmig ausgestaltet und umschließt die Sonde 114 in Form einer ringförmigen Schulter. Weiter weist das Aufnahmeelement 126 ein Dichtelement 144 auf. Die erste linienförmige Dichtung wird durch das Dichtelement 144 und das Auflageelement 142 gebildet. Bei in das Aufnahmeelement 126 eingebrachter Sonde 114 liegt das Auflageelement 142 auf dem Dichtelement 144 auf, wobei sich insbesondere eine Fläche des Auflageelements 142 und eine Fläche des Dichtelements 144 berühren. Insbesondere berühren sich die Flächen linienförmig.

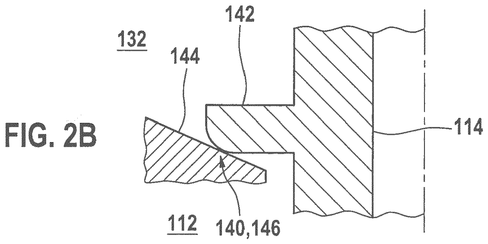

In Figur 2B wird die erfindungsgemäße linienförmige Dichtung 146 dargestellt. Das Dichtelement 144 weist eine konische Fläche und das Auflageelement 142 einen Radius mit einer gerundeten Fläche auf. Die konische Fläche des Dichtelements 144 und die gerundete Fläche des Auflageelements 142, berühren sich derart, dass sie bei einem Aufeinanderliegen eine linienförmige Dichtung 140, insbesondere die erste linienförmige Dichtung 146, bilden, welche eingerichtet ist, die Sonde 114 von dem Messgasraum 112 abzudichten.

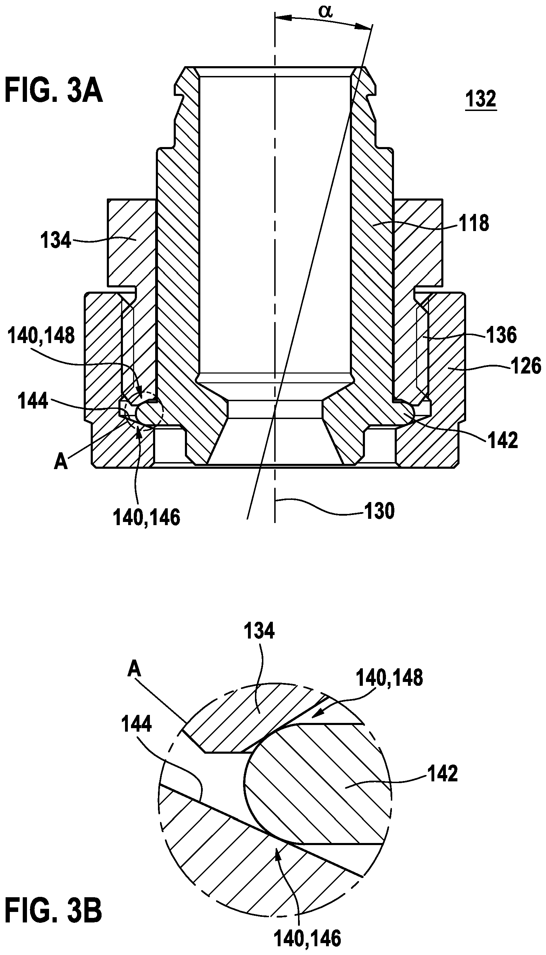

Figur 3A zeigt ein weiteres Ausführungsbeispiel der erfindungsgemäßen linienförmigen Dichtung 140. Eine Vergrößerung des Bildausschnitts A ist in Figur 3B dargestellt. In diesem Ausführungsbeispiel kann die Dichtung 140 die erste linienförmige Dichtung 146 und eine zweite linienförmige Dichtung 148 umfassen. Die erste linienförmige Dichtung 146 wird durch das Aufnahmeelement 126 und das Auflageelement 142 gebildet. Das Dichtelement 144 weist eine konische Fläche und das Auflageelement 142 einen Radius mit einer gerundeten Fläche auf. Die konische Fläche des Dichtelements 144 und die gerundete Fläche des Auflageelements 142, berühren sich derart, dass sie bei einem Aufeinanderliegen die erste linienförmige Dichtung 146 bilden. Die zweite linienförmige Dichtung 148 kann durch das Gehäuse 118, insbesondere das Auflageelement 142, und ein Fixierelement 134 zur Fixierung des Gehäuses 118 in dem Aufnahmeelement gebildet werden. Das Fixierelement 134 kann insbesondere als eine Überwurfschraube und/oder eine Überwurfmutter ausgestaltet sein. Das Fixierelement 134 kann eine konische Fläche und das Auflageelement 142 einen Radius aufweisen, insbesondere eine gerundete Fläche. Die konische Fläche des Fixierelements 134 und die gerundete Fläche des Auflageelements 142, berühren sich derart, dass sie bei einem Aufeinanderliegen die zweite linienförmige Dichtung 148 bilden.

Das Auflageelement 142 kann in einer axialen Richtung zwischen den linienförmigen Dichtungen eingebettet sein. Das Gehäuse 118 kann flexibel zwischen der ersten linienförmigen Dichtung 146 und der zweiten linienförmigen Dichtung 148 eingespannt werden und/oder die erste linienförmige Dichtung 146 und die zweite linienförmige Dichtung 148 können das Gehäuse 118 hinsichtlich einer Kippbewegung um eine Achse des Sensorsystems 110, insbesondere einer Kippbewegung in einem Winkel a zu der Einsteckachse 130, flexibel einspannen. So kann das Auflageelement 142, insbesondere die Sonde 114, zwischen der ersten linienförmigen Dichtung 146 und der zweiten linienförmigen Dichtung 148 axial ausgerichtet werden.

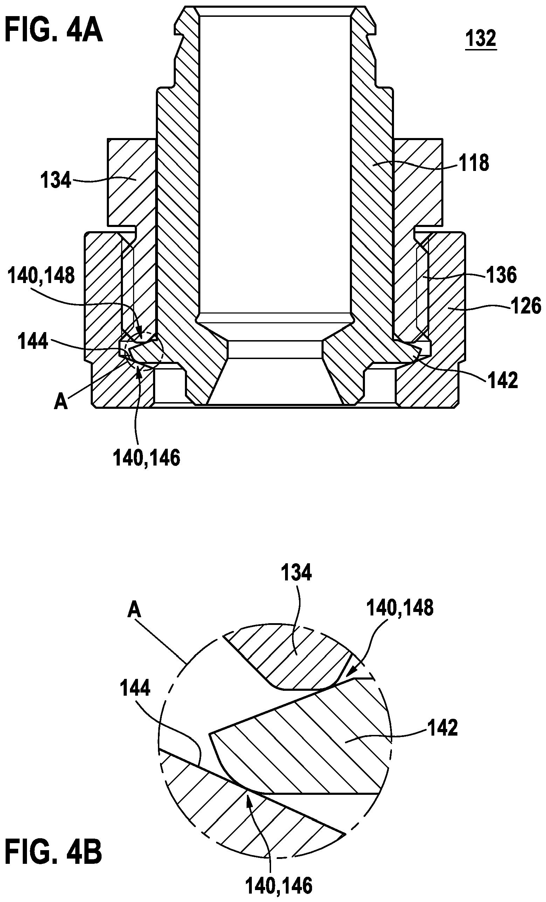

In Figur 4A ist ein weiteres Ausführungsbeispiel der Dichtung 140 gezeigt, in welchem die Dichtung 140 die erste linienförmige Dichtung 146 und die zweite linienförmige Dichtung 148 umfassen kann. Eine Vergrößerung des Bildausschnitts A ist in Figur 4B dargestellt. Die erste linienförmige Dichtung 146 wird durch eine konische Fläche des Dichtelements 144 und eine gerundete Fläche mit einem Radius des Auflageelements 142 gebildet. Die zweite linienförmige Dichtung 148 kann durch eine gerundete Fläche, insbesondere einen Radius, des Fixierelements 134 und eine konische Fläche des Auflageelements 142 gebildet werden.

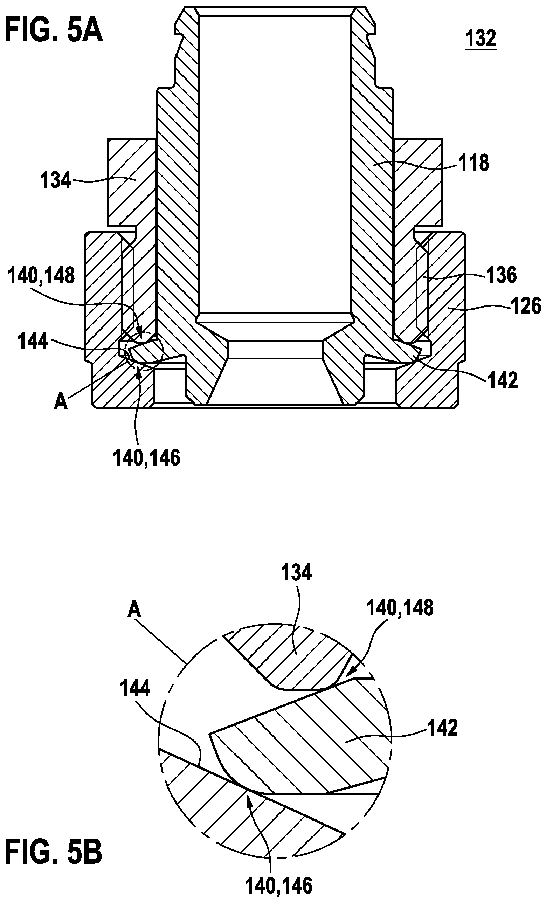

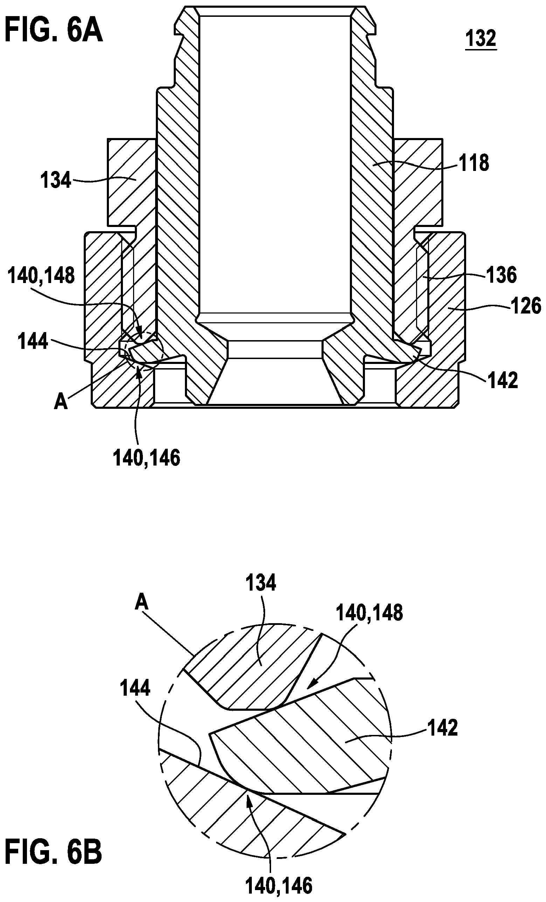

In den Figuren 5 und 6 ist ein Ausführungsbeispiel dargestellt, in welchem die Dichtung 140 die erste linienförmige Dichtung 146 und die zweite linienförmige Dichtung 148 umfassen kann und das Auflageelement 142 zumindest teilweise als Federelement, insbesondere als Tellerfeder, ausgestaltet werden kann. Die erste linienförmige Dichtung 146 wird durch eine konische Fläche des Dichtelements 144 und eine gerundete Fläche mit einem Radius des Auflageelements 142 gebildet. Die zweite linienförmige Dichtung 148 kann durch eine gerundete Fläche, insbesondere einen Radius, des Fixierelements 134 und eine konische Fläche des Auflageelements 142 gebildet werden. Eine Vergrößerung des jeweiligen Bildausschnitts A ist in Figur 5B und Figur 6B dargestellt. Beispielsweise bei Vibrationen, kann das Auflageelement 142 sich zwischen der ersten linienförmigen Dichtung 146 und der zweiten linienförmigen Dichtung 148 bewegen und so eine Dichtigkeit gewährleisten. Die Figuren 5B und 6B zeigen das Auflageelement 142 in verschiedenen Positionen zwischen dem Dichtelement 144 und dem Fixierelement 134.

## Patentansprüche

1. Sensorsystem (110) zur Erfassung mindestens einer Eigenschaft eines Messgases in einem Messgasraum (112), umfassend eine Sonde (114) zur Erfassung der Eigenschaft des Messgases, wobei die Sonde (114) mindestens ein Sensorelement (116) und mindestens ein das Sensorelement (116) umschließendes Gehäuse (118) aufweist, wobei das Gehäuse (118) derart ausgestaltet ist, dass das Sensorelement (116) in dem Gehäuse (118) mit dem Messgas beaufschlagbar ist, wobei das Sensorsystem (110) weiterhin ein mit einer Wand (128) des Messgasraums (112) verbindbares Aufnahmeelement (126) aufweist, wobei die Sonde (114) entlang einer Einsteckachse (130) in das Aufnahmeelement (126) einbringbar ist und in dem Aufnahmeelement (126) fixierbar ist, wobei eine Dichtung (140) vorgesehen ist, die derart ausgestaltet ist, dass ein Austritt von Stoffen aus dem Messgasraum durch einen Zwischenraum zwischen dem Gehäuse (118) und dem Aufnahmeelement (126) und/oder zwischen dem Gehäuse (118) und der Wand des Messgasraums (112) verhinderbar ist, insbesondere verhindert wird, wobei die Dichtung (140) mindestens eine linienförmige Dichtung umfasst, wobei das Gehäuse (118) ein Auflageelement (142) aufweist und wobei das Aufnahmeelement (126) ein Dichtelement (144) aufweist, wobei das Auflageelement (142) und das Dichtelement (144) die linienförmige Dichtung (140) bilden und wobei bei in das Aufnahmeelement (126) eingebrachter Sonde (114) das Auflageelement (142) auf dem Dichtelement (144) aufliegt, wobei das Sensorsystem (110) weiterhin mindestens ein Fixierelement (134) aufweist, wobei das Fixierelement (134) eingerichtet ist, um die Sonde (114) kraftschlüssig in dem Aufnahmeelement (126) zu fixieren, wobei das Fixierelement (134) mindestens ein Gewinde (136) aufweist, wobei das Gewinde (136) ein Gehäuse-seitiges Gewinde und ein Aufnahmeelement-seitiges Gewinde aufweist **dadurch gekennzeichnet, dass** das Auflageelement (142) als Tellerfeder ausgestaltet ist und die Sonde (114) ringförmig in Form einer ringförmigen Schulter umschließt, dass die Eigenschaft des Messgases die Partikelbeladung des Messgases ist, dass das Sensorelement mindestens zwei Elektroden auf einer keramischen Messoberfläche aufweist und eingerichtet ist, um einen elektrischen Widerstand zwischen den mindestens zwei Elektroden zu erfassen, welcher durch eine Partikelbeladung des Messgases beeinflusst wird, und das Sensorelement ein Heizelement umfasst, um eine geeignete Funktionstemperatur zu gewährleisten, dass das Sondengehäuse, das Aufnahmeelement und das Fixierelement aus Stahl hergestellt sind und dass die linienförmige Dichtung (140) eine konisch-Radius-förmige Dichtung ist, bei der das Dichtelement (144) eine konische Fläche aufweist und das Auflageelement (142) eine gerundete Fläche mit einem Radius aufweist.

2. Sensorsystem (110) nach dem vorhergehenden Anspruch, wobei die linienförmige Dichtung durch das Aufnahmeelement (126) und das Gehäuse (118) gebildet wird.

3. Sensorsystem (110) nach einem der beiden vorhergehenden Ansprüche, wobei das Auflageelement (142) und das Dichtelement (144) selbstzentrierend ausgestaltet sind.

4. Sensorsystem (110) nach einem der drei vorhergehenden Ansprüche, wobei die Dichtung (140) mindestens zwei Dichtungen umfasst.

5. Sensorsystem (110) nach einem der vorhergehenden Ansprüche, wobei die Sonde (114) lösbar mit dem Aufnahmeelement (126) verbindbar ist.

6. Sensorsystem (110) nach einem der vorhergehenden Ansprüche, wobei das Aufnahmeelement (126) als Einschweißstutzen ausgestaltet ist.

7. Sensorsystem (110) nach einem der vorhergehenden Ansprüche, wobei das Gehäuse (118) mindestens ein Schutzrohr (120) umfasst, wobei das Schutzrohr (120) mindestens einen Innenraum (138) und mindestens das in dem Innenraum (138) aufgenommenes Sensorelement (116) aufweist, wobei das Schutzrohr (120) derart ausgestaltet ist, dass das Messgas in den Innenraum (138) eindringen kann.

8. Sensorsystem (110) nach dem vorhergehenden Anspruch, wobei das Schutzrohr (120) ein doppelwandiges Schutzrohr ist, wobei das doppelwandige Schutzrohr einen Ringspalt aufweist, wobei das Messgas durch den Ringspalt in den Innenraum (138) einströmen kann.

## Claims

1. Sensor system (110) for detecting at least one property of a sample gas in a sample gas chamber (112), comprising a probe (114) for detecting the property of the sample gas, the probe (114) having at least one sensor element (116) and at least one housing (118) enclosing the sensor element (116), the housing (118) being configured in such a way that the sensor element (116) can be acted on by the sample gas in the housing (118), the sensor system (110) also having a receiving element (126) that can be connected to a wall (128) of the sample gas chamber (112), where the probe (114) can be introduced into the receiving element (126) along an insertion axis (130) and can be fixed in the receiving element (126), a seal (140) being provided, which is configured in such a way that an escape of substances from the sample gas chamber through an interspace between the housing (118) and the receiving element (126) and/or between the housing (118) and the wall of the sample gas chamber (112) can be prevented, in particular is prevented, the seal (140) comprising at least one linear seal, the housing (118) having a supporting element (142) and the receiving element (126) having a sealing element (144), the supporting element (142) and the sealing element (144) forming the linear seal (140) and, when the probe (114) is introduced into the receiving element (126), the supporting element (142) resting on the sealing element (144), the sensor system (110) also having at least one fixing element (134), the fixing element (134) being designed to fix the probe (114) with a force fit in the receiving element (126), the fixing element (134) having at least one thread (136), the thread (136) having a thread on the housing side and a thread on the receiving element side,
**characterized in that** the supporting element (142) is configured as a disc spring and encloses the probe (114) annularly in the form of an annular shoulder, **in that** the property of the sample gas is the particle loading of the sample gas, **in that** the sensor element has at least two electrodes on a ceramic measuring surface and is configured to detect an electrical resistance between the at least two electrodes, which is influenced by the particle loading of the sample gas, and the sensor element comprises a heating element in order to ensure a suitable functioning temperature, **in that** the probe housing, the receiving element and the fixing element are produced from steel, and **in that** the linear seal (140) is a conical radius seal, in which the sealing element (144) has a conical surface and the supporting element (142) has a rounded surface with a radius.

2. Sensor system (110) according to the preceding claim, wherein the linear seal is formed by the receiving element (126) and the housing (118).

3. Sensor system (110) according to one of the two preceding claims, wherein the supporting element (142) and the sealing element (144) are configured to be self-centring.

4. Sensor system (110) according to one of the three preceding claims, wherein the seal (140) comprises at least two seals.

5. Sensor system (110) according to one of the preceding claims, wherein the probe (114) can be connected detachably to the receiving element (126).

6. Sensor system (110) according to one of the preceding claims, wherein the receiving element (126) is configured as a weld-in socket.

7. Sensor system (110) according to one of the preceding claims, wherein the housing (118) comprises at least one protective tube (120), wherein the protective tube (120) has at least one internal space (138) and at least the sensor a element (116) accommodated in the internal space (138), wherein the protective tube (120) is configured in such a way that the sample gas can penetrate into the internal space (138).

8. Sensor system (110) according to the preceding claim, wherein the protective tube (120) is a double-walled protective tube, wherein the double-walled protective tube has an annular gap, wherein the sample gas can flow into the internal space (138) through the annular gap.

## Revendications

1. Système de capteur (110) pour détecter au moins une propriété d'un gaz de mesure dans un espace de gaz de mesure (112), comprenant une sonde (114) pour détecter la propriété du gaz de mesure, la sonde (114) présentant au moins un élément de capteur (116) et au moins un boîtier (118) entourant l'élément de capteur (116), le boîtier (118) étant configuré de telle sorte que l'élément de capteur (116) puisse être sollicité avec le gaz de mesure dans le boîtier (118), le système de capteur (110) présentant en outre un élément de réception (126) pouvant être connecté à une paroi (128) de l'espace de gaz de mesure (112), la sonde (114) pouvant être introduite dans l'élément de réception (126) le long d'un axe d'enfichage (130) et pouvant être fixée dans l'élément de réception (126), un joint d'étanchéité (140) étant prévu, lequel est configuré de telle sorte qu'une sortie de substances hors de l'espace de gaz de mesure à travers un espace intermédiaire entre le boîtier (118) et l'élément de réception (126) et/ou entre le boîtier (118) et la paroi de l'espace de gaz de mesure (112) puisse être empêchée, en particulier soit empêchée, le joint d'étanchéité (140) comprenant au moins un joint d'étanchéité de forme linéaire, le boîtier (118) présentant un élément d'appui (142) et l'élément de réception (126) présentant un élément d'étanchéité (144), l'élément d'appui (142) et l'élément d'étanchéité (144) formant le joint d'étanchéité de forme linéaire (140) et, lorsque la sonde (114) est introduite dans l'élément de réception (126), l'élément d'appui (142) reposant sur l'élément d'étanchéité (144), le système de capteur (110) présentant en outre au moins un élément de fixation (134), l'élément de fixation (134) étant prévu pour fixer la sonde (114) par engagement par force dans l'élément de réception (126), l'élément de fixation (134) présentant au moins un filetage (136), le filetage (136) présentant un filetage côté boîtier et un filetage côté élément de réception, **caractérisé en ce que** l'élément d'appui (142) est configuré sous forme de ressort Belleville et entoure la sonde (114) sous forme annulaire à la manière d'un épaulement annulaire, **en ce que** la propriété du gaz de mesure est la charge en particules du gaz de mesure, **en ce que** l'élément de capteur présente au moins deux électrodes sur une surface de mesure en céramique et est prévu pour détecter une résistance électrique entre les au moins deux électrodes, laquelle est influencée par une charge en particules du gaz de mesure, et l'élément de capteur comprend un élément chauffant afin d'assurer une température de fonctionnement appropriée, **en ce que** le boîtier de sonde, l'élément de réception et l'élément de fixation sont fabriqués en acier et **en ce que** le joint d'étanchéité de forme linéaire (140) est un joint d'étanchéité en forme de rayon conique, l'élément d'étanchéité (144) présentant une surface conique et l'élément d'appui (142) présentant une surface arrondie en forme de rayon.

2. Système de capteur (110) selon la revendication précédente, dans lequel le joint d'étanchéité de forme linéaire est formé par l'élément de réception (126) et par le boîtier (118).

3. Système de capteur (110) selon l'une quelconque des deux revendications précédentes, dans lequel l'élément d'appui (142) et l'élément d'étanchéité (144) sont configurés de manière auto-centrable.

4. Système de capteur (110) .selon l'une quelconque des trois revendications précédentes, dans lequel le joint d'étanchéité (140) comprend au moins deux joints d'étanchéité.

5. Système de capteur (110) selon l'une quelconque des revendications précédentes, dans lequel la sonde (114) peut être connectée de manière amovible à l'élément de réception (126).

6. Système de capteur (110) selon l'une quelconque des revendications précédentes, dans lequel l'élément de réception (126) est configuré sous forme de raccord soudé.

7. Système de capteur (110) selon l'une quelconque des revendications précédentes, dans lequel le boîtier (118) comprend au moins un tube de protection (120), le tube de protection (120) présentant au moins un espace interne (138) et au moins l'élément de capteur (116) reçu dans l'espace interne (138), le tube de protection (120) étant configuré de telle sorte que le gaz de mesure puisse pénétrer dans l'espace interne (138) .

8. Système de capteur (110) selon la revendication précédente, dans lequel le tube de protection (120) est un tube de protection à double paroi, le tube de protection à double paroi présentant une fente annulaire, le gaz de mesure pouvant affluer à travers la fente annulaire dans l'espace interne (138) .
